Europäisches Patentamt

European Patent Office

Office européen des brevets

(19)

(11) Veröffentlichungsnummer: **0 006 892**
**B1**

# (12) EUROPÄISCHE PATENTSCHRIFT

(45) Veröffentlichungstag der Patentschrift:
10.06.81

(21) Anmeldenummer: 78900086.6

(22) Anmeldetag: 01.06.78

(86) Internationale Anmeldenummer:
PCT/DE 78/00001

(87) Internationale Veröffentlichungsnummer:
WO 79/00101 (08.03.79 Gazette 79/5)

(51) Int. Cl.³: **C 04 B 41/04**, C 04 B 35/64,
B 22 F 3/14, C 04 B 35/58

(54) Verfahren zür Kapselung eines Formkörpers aus Keramik.

(30) Priorität: 18.08.77 DE 2737173

(43) Veröffentlichungstag der Anmeldung:
23.01.80 Patentblatt 80/2

(45) Bekanntmachung des Hinweises auf die Patenterteilung:
10.06.81 Patentblatt 81/23

(84) Benannte Vertragsstaaten:
CH FR GB SE

(56) Entgegenhaltungen:
DE-A-2 349 277
FR-A-2 258 921
CHEMICAL ABSTRACTS, volume 84, Nr. 20, 17 May 1976 (Columbus, Ohio, USA), Y. INOMATA, »Silicon nitride sintered body with silicon coating«, page 290, column 1, abstract Nr. 139 815x

(73) Patentinhaber: MOTOREN- UND TURBINEN-UNION, MÜNCHEN GMBH, Dachauer Strasse 665, D-8000 München 50 (DE)

(72) Erfinder: Betz, Wolfgang, Aubinger Strasse 139 d, D-8000 München 60 (DE)
Erfinder: Hüther, Werner, Nikolaus-Lenau-Strasse 8, D-8047 Karlsfeld (DE)

## Verfahren zur Kapselung eines Formkörpers aus Keramik

Die Erfindung bezieht sich auf ein Verfahren zur Kapselung eines Formkörpers aus Keramik, insbesondere aus Siliciumkeramik für das heißisostatische Pressen, bei dem auf die Oberfläche des Formkörpers Silicium aufgebracht wird. Beim heißisostatischen Pressen (HIP) werden poröse Formkörper aus Siliciumkeramik unter gleichzeitigem Aufbringen von allseitig wirkendem hohen Druck und hoher Temperatur verdichtet. Durch das Heißisostatpressen lassen sich sowohl mechanische Festigkeit bei hoher Temperatur als auch Oxydationsbeständigkeit durch Verringerung der Porösität der Formkörper verbessern. Die beim Heißisostatpressen (HIP) angewendeten Drücke liegen in der Größenordnung von 3000 bar, die Temperatur bei 1750°C. Als druckübertragendes Medium wird üblicherweise Gas verwendet. Um zu verhindern, daß dieses Gas in die Porösität des Formkörpers eindringt, muß dieser druckdicht gekapselt werden. Bisher erfolgt diese Kapselung in der Weise, daß der Keramikformkörper in einem evakuierten Glasbehälter eingeschlossen wird, wobei der Glasbehälter beim Heißisostatpressen in zähflüssige Form übergeht und sich als Glasschicht an den Keramikformkörper anlegt.

Bei diesem bekannten Verfahren zur Kapselung der Keramikformkörper besteht die Gefahr, daß bei zu niedriger Viskosität des beim Heißisostatpressen schmelzenden Glasbehälters die Glasschicht in die Porösität des Formkörpers eindringt, wobei unter Umständen die Festigkeit des Formkörpers im Oberflächenbereich erniedrigt wird. Weiterhin kann durch zu starkes Eindringen des dünnflüssigen Glases in die Porösität des Formkörpers eine so innige Verbindung zwischen der Glashülle und dem Formkörper entstehen, daß beim Entfernen der Glashülle nach dem Heißisostatpressen Beschädigungen der Keramikformkörper, insbesondere solcher mit komplizierten dünnwandigen Formen nicht vermeidbar ist. Andererseits besteht die Gefahr, daß bei zu hoher Viskosität des beim Heißisostatpressen aufschmelzenden Glasbehälters und der daraus sich an den Keramikformkörper anlegenden Glasschicht Deformationen des Keramikformkörpers auftreten, was absolut unerwünscht ist.

Aus »Chemical Abstracts, Vol. 84, Nr. 20, 17. Mai 1976, Seite 290« ist bekannt, Körper aus Siliciumkeramik mit Silicium (Si) zu beschichten. Bei dem dort offenbarten Verfahren wird die Siliciumschicht jedoch auf die Oberfläche des Keramikkörpers aufgebracht und danach erst zu einer dichten Schicht aufgeschmolzen. Bei diesem Verfahren besteht die Gefahr, daß sich die Siliciumschicht nicht in ausreichendem Maß an die Oberfläche des Keramikkörpers anlegt und beim heißisostatischen Pressen oder schon vorher durch mechanische Beeinträchtigung Beschädigungen der Siliciumschicht auftreten, oder aber daß das Aufschmelzen des Siliciums nicht so vollständig erfolgt, daß eine allseits dichte Hülle entsteht.

Aus der DE-A 24 49 277 ist es bekannt, beim isostatischen Heißpressen eine Trennschicht auf dem Formkörper dadurch zu erzeugen, daß man ihn in einen aluminiumoxidreichen Schlicker eintaucht. Die sich auf der Oberfläche bildende Schlickerschicht wird anschließend zu einer Glasur gebrannt.

Aufgabe der vorliegenden Erfindung ist es, ein Verfahren zur Kapselung eines Formkörpers aus Keramik anzugeben, mit dem eine druckdichte Kapselung des Formkörpers erzielbar ist, und gleichzeitig die ursprüngliche geometrische Form des Keramikformkörpers soweit irgend möglich, exakt beibehalten wird.

Zur Lösung dieser Aufgabe wird erfindungsgemäß vorgeschlagen, daß der Formkörper zunächst evakuiert und mit Stickstoffgas gefüllt wird und danach in eine Siliciumschmelze eingetaucht wird.

Durch das Eintauchen des Formkörpers in die Siliciumschmelze dringt flüssiges Silicium in die Poren des Formkörpers ein und reagiert mit dem im Formkörper vorhandenen Stickstoffgas zu $Si_3N_4$. Es entstehen $Si_3N_4$-Stöpsel, die die Poren verschließen. Hierdurch erhält der Körper eine gasdichte Oberfläche und kann heißisostatisch nachverdichtet werden.

Vorzugsweise sollen Formkörper und Schmelze vor dem Eintauchen auf eine Temperatur von 1410 bis 1800°C erhitzt werden, um eine ausreichend gute Benetzbarkeit des Formkörpers mit flüssigem Silicium zu ermöglichen.

Weiterhin wird vorgeschlagen, daß das Befüllen des Formkörpers mit Stickstoff unter erhöhtem Druck erfolgt, eine Maßnahme, die dazu dient, eine möglichst große Menge von Stickstoffgas in den Formkörper einzubringen, um nach dem Eindringen der Siliciumschmelze ein maximales Wachstum der $Si_3N_4$-Stöpsel zu ermöglichen.

Bei einer bevorzugten Ausführungsform des Verfahrens soll nach dem Eintauchen des Formkörpers der Druck auf die Siliciumschmelze stetig erhöht werden. Dadurch wird erreicht, daß die sich bildende $Si_3N_4$-Haut immer wieder bricht und weiter innen in den Poren erneut gebildet wird.

Bei einer weiteren Ausführungsform des Verfahrens soll nach Eintauchen des Formkörpers der Druck auf die Siliciumschmelze periodisch erhöht und erniedrigt werden. Hierdurch wird erreicht, daß die $Si_3N_4$-Haut immer wieder zerbricht, was so lange erfolgt, bis die Bruchstücke zu einem festen Stöpsel zusammenwachsen. Mit Hilfe des zuletzt beschriebenen Verfahrens lassen sich dickere $Si_3N_4$-Stöpsel erzeugen als bei der erst erwähnten Ausführungsform. Ein weiterer Verfahrensparameter, von dem unmittelbar die Dicke der

erzeugbaren $Si_3N_4$-Stöpsel abhängt, ist der Druck, mit dem der Stickstoff in dem noch porösen Formkörper eingepreßt wird. Je höher der Druck gewählt wird, desto größer wird der Stickstoffvorrat im Formkörper und desto dickere $Si_3N_4$-Stöpsel lassen sich erzeugen.

## Patentansprüche

1. Verfahren zur Kapselung eines Formkörpers aus Keramik, insbesondere aus Siliciumkeramik für das heißisostatische Pressen, bei dem auf die Oberfläche des Formkörpers Silicium aufgebracht wird, dadurch gekennzeichnet, daß der Formkörper zunächst evakuiert und mit Stickstoffgas ($N_2$) gefüllt wird und danach in eine Siliciumschmelze (Si) eingetaucht wird.

2. Verfahren nach Anspruch 1, dadurch gekennzeichnet, daß der Formkörper und die Schmelze vor dem Eintauchen auf eine Temperatur von 1410 bis 1800°C eritzt werden.

3. Verfahren nach Anspruch 1 oder 2, dadurch gekennzeichnet, daß das Befüllen des Formkörpers mit Stickstoffgas ($N_2$) unter erhöhtem Druck erfolgt.

4. Verfahren nach einem oder mehreren der Ansprüche 1 bis 3, dadurch gekennzeichnet, daß nach dem Eintauchen des Formkörpers der Druck auf die Si-Schmelze stetig erhöht wird.

5. Verfahren nach einem oder mehreren der Ansprüche 1 bis 3, dadurch gekennzeichnet, daß nach dem Eintauchen des Formkörpers der Druck auf die Si-Schmelze periodisch erhöht und erniedrigt wird.

## Claims

1. A method of encapsulating a mould body formed from ceramic material, particularly silicon ceramic for hot isostatic presses, in which the top surface of the mould body is coated with silicon, characterised in that the mould body is first evacuated and filled with nitrogen gas ($N_2$), and is then immersed in a silicon melt (Si).

2. A method according to Claim 1, characterised in that the mould body and the melt are heated to a temperature of 1410 to 1800°C before immersion takes place.

3. A method according to Claim 1 or 2, characterised in that the mould body is filled with nitrogen gas ($N_2$) under pressure.

4. A method according to one more of Claims 1 to 3, characterised in that when the mould body has been immersed, the pressure on the Si-melt is continously increased.

5. A method according to one or more of claims 1 to 3, characterised in that when the mould body has been immersed, the pressure in the Si-melt is periodically increased and decreased.

## Revendications

1. Procédé pour encapsuler un corps en céramique, en particulier en céramique de silicium pour des presses isostatiques à chaud, selon lequel on dépose du silicium sur la surface du corps, procédé caractérisé en ce que le corps est d'abord soumis au vide, puis rempli par de l'azote gazeux ($N_2$) et ensuite, il est plongé dans une masse fondue de silicium (Si).

2. Procédé selon la revendication 1, caractérisé en ce que le corps et la masse fondue sont portés, avant l'immersion, à une température de 1410 à 1800°C.

3. Procédé selon l'une des revendications 1 ou 2, caractérisé en ce que le remplissage du corps avec de l'azite gazeux ($N_2$) s'effectue sous pression élevée.

4. Procédé selon l'une quelconque des revendications 1 à 3, caractérisé en ce que, après l'immersion du corps, la pression au-dessus de la masse fondue de silicium est élevée continuellement.

5. Procédé selon l'une quelconque des revendications 1 à 3, caractérisé en ce que, après l'immersion du corps, la pression au-dessus de la masse fondue de silicium, est périodiquement élevée et abaissée.